# EUROPÄISCHE PATENTSCHRIFT

(11) **EP 1 664 146 B1**
(45) Veröffentlichungstag und Bekanntmachung des Hinweises auf die Patenterteilung: **08.02.2012**
(21) Anmeldenummer: 04765098.1
(22) Anmeldetag: 11.09.2004
(51) Int. Cl.: C08G 18/10, C08G 18/76, C09J 175/04, C09J 5/06

(54) **POLYURETHAN-SCHMELZKLEBSTOFFE MIT LANGER REAKTIVIERBARKEIT**
POLYURETHANE HOT-MELT-TYPE ADHESIVE EXHIBITING A LONG REACTIVATION ABILITY
ADHESIFS FUSIBLES AU POLYURETHANNE PRESENTANT UNE LONGUE APTITUDE A LA REACTIVATION

(30) Priorität: 22.09.2003 DE 10343750
(43) Veröffentlichungstag der Anmeldung: 07.06.2006
(73) Patentinhaber: Henkel AG & Co. KGaA, 40589 Düsseldorf (DE)
(72) Erfinder: KREBS, Michael, 40724 Hilden (DE); FRANKEN, Uwe, 41542 Dormagen (DE); KREMER, Christian, 41363 Jüchen (DE)
(86) Internationale Anmeldenummer: PCT/EP2004/010175
(87) Internationale Veröffentlichungsnummer: WO 2005/033164

(56) Entgegenhaltungen:
- EP-A- 0 693 511
- WO-A-03/033562
- DE-A- 19 732 755
- DATABASE WPI Section Ch, Week 199249 Derwent Publications Ltd., London, GB; Class A28, AN 1992-403482 XP002310364 & JP 04 300985 A (SUNSTAR GIKEN KK) 23. Oktober 1992 (1992-10-23) in der Anmeldung erwähnt

## Beschreibung

Die vorliegende Erfindung betrifft ein Verfahren zum Verkleben von Substraten mit einem Klebstoff, der thermisch reaktiviert werden kann, sowie die Verwendung dieses Verfahrens zum Fügen von Substraten.

Für eine Vielzahl von industriellen Fügeprozesse werden heute Klebstoffe eingesetzt, insbesondere Schmelzklebstoffe finden hierfür zunehmend Verwendung. Diese gehören bekanntlich zu den physikalisch abbindenden Klebstoffarten. Sie liegen bei Raumtemperatur einkomponentig in fester und lösungsmittelfreier Form vor und werden durch Erwärmen aufgeschmolzen und aus der Schmelze auf die zu fügenden Substratoberflächen aufgetragen. Bei thermoplastischen, nicht reaktiven Schmelzklebstoffen erfolgt die Verbindung der Substrate durch das Erstarren der in dem Schmelzklebstoff als Bindemittel vorhandenen thermoplastischen Bestandteile, die in amorphem oder teilkristallinem Zustand vorliegen können. Derartige Schmelzklebstoffe lassen sich durch Erwärmen beliebig oft wieder aufschmelzen und somit thermisch aktivieren, nach dem Erkalten des Klebstoffes wird die Festigkeit der Klebeverbindung wieder erzielt. Nachteilig dieser Schmelzklebstoffe sind ihre relativ geringe thermische Beständigkeit sowie die verhältnismäßig niedrigen Endfestigkeit der mit diesen Klebstoffen zu erzielenden Fügeverbindungen.

Für anspruchsvolle Verklebungen, die ein höheres Festigkeitsniveau und eine hohe Wärmestandfestigkeit der Verklebung erfordern, werden heute reaktive Schmelzklebstoffe eingesetzt, die entweder durch Energiezufuhr, d.h. weiteres Erhitzen vernetzt werden oder mittels Feuchtigkeit zum unschmelzbaren Klebstoff aushärten. Insbesondere die letztgenannten, reaktiven feuchtigkeitshärtenden Schmelzklebstoffe haben in der industriellen Praxis eine weite Verbreitung gefunden. Diese Schmelzklebstoffe werden wie die thermoplastischen Schmelzklebstoffe aus der Schmelze aufgetragen, nach dem Auftrag, dem Fügen der zu verbindenden Substrat-Teile und dem Abkühlen dieser Schmelze erfolgt zunächst eine rasche physikalische Abbindung des Schmelzklebstoffes durch dessen Erstarren. Daran schließt sich bei den feuchtigkeitsreaktiven Schmelzklebstoffen eine chemische Reaktion der noch vorhandenen reaktiven Gruppen mit der Feuchtigkeit aus der Umgebung an, so daß ein vernetzter und unschmelzbarer Klebstoff entsteht. Reaktive Schmelzklebstoffe auf der Basis von Isocyanat-funktionellen Polyurethan-Prepolymeren haben eine besonders breite Verwendung gefunden. In der Regel ist es das Bestreben, die reaktiven Schmelzklebstoffe, z.B. auf der Basis von feuchtigkeitsvernetzenden reaktiven Polyurethanen, so zu gestalten, daß sowohl die Anfangsfestigkeit durch das Erstarren als auch die Endfestigkeit durch die Feuchtigkeitsvernetzung so schnell wie möglich erfolgt, damit die gefügten Bauteile entweder weiterverarbeitet werden können oder endgültig in Gebrauch genommen werden können.

Für einige Fertigungsprozesse ist es jedoch wünschenswert, das Beschichten der zu klebenden Substrate mit dem Klebstoff räumlich und/oder zeitlich vom Fügen der Substrate zu trennen. Hierzu ist es für den Fügeprozess der vorbeschichteten Substrate notwendig, die Klebstoffschichten thermisch aktiveren bzw. reaktivieren zu können.

US 5,340,946 beschreibt einen hitzeaktivierbaren Klebstoff für die Herstellung von drahtgeschriebenen Leiterzugnetzwerken. Dazu soll eine filmbildende Polymerzusammensetzung zunächst auf den Leiterzug aufgebracht werden und dort eine trockene und nicht klebrige Beschichtung ausbilden. Anschließend soll der Leiterzug durch Beaufschlagung mit Wärme-, Strahlungs- bzw. Ultraschallenergie örtlich für eine Zeitspanne von weniger als einer Sekunde nach Energieeinwirkung aktiviert werden, jedoch nicht ausgehärtet werden, es soll keine vollständige Überführung in den "C-Zustand" erfolgen. In einem nachgeschalteten Härtungsprozess soll der Klebstoff dann in die vernetzte Form ("C-Zustand") überführt werden.

EP 0 812 610 A2 beschreibt ein Verfahren zur Herstellung eines Filterelements, bei dem auf Papierblätter Streifen eines Schmelzklebstoffes aufgebracht werden sollen und in einem späteren Fertigungsschritt der Schmelzklebstoff durch Zufuhr von Wärme aktiviert werden soll. Die Verwendung von reaktiven Schmelzklebstoffen wird nicht offenbart.

JP 04-300985 A beschreibt eine reaktive Schmelzklebstoffzusammensetzung auf der Basis eines Polyurethan-Prepolymers aus einer Polyolmischung und einem Polyisocyanat. Es wird offenbart, daß diese Zusammensetzung eine lange Topfzeit nach der Beschichtung hat, wodurch eine thermische Reaktivierung vermieden werden soll. Die Polyolmischung dieser Polyurethan-PrepolymerZusammensetzung soll aus einem flüssigen Polyester mit niedrigen Erweichungspunkt und einem Polyester mit einer hohen Kristallinität zusammengesetzt sein. Ein Verfahren, bei dem Klebstoffauftrag und Fügen der Substrate räumlich und/oder zeitlich voneinander getrennt vorgenommen wird nicht offenbart.

Es besteht also Bedarf für die Bereitstellung eines Klebeverfahrens, bei dem der Klebstoff zunächst auf später zu verklebende Substrate aufgetragen wird und die Klebstoffschicht zeitlich und/oder räumlich getrennt vom Klebstoffauftrag thermisch aktiviert wird, so daß derartig beschichtete Substrate anschließend gefügt werden können. Dabei sollen die ausgehärteten Klebstoffschichten die guten thermischen und mechanischen Beständigkeiten der bisher bekannten reaktiven Schmelzklebstoffe aufweisen.

Die erfindungsgemäße Lösung der Aufgabe ist den Patentansprüchen zu entnehmen.

Sie besteht im wesentlichen in der Bereitstellung eines Verfahrens zum Verkleben von Substraten mit Hilfe eines Klebstoffes auf der Basis von reaktiven Polyurethan-Zusammensetzungen, wobei diese Polyurethan-Zusammensetzung Reaktionsprodukte aus mindestens einem Polyol und mindestens einem Diisocyanat mit einem Anteil von mindestens 80 Gew.-% 2,4'-Diphenyl-methandiisocyanat (2,4'-MDI), bezogen auf Diisocyanatzusammensetzung, enthält. Dieser Klebstoff wird zunächst aus der Schmelze auf eine zu verklebende Oberfläche mindestens eines Substrates aufgetragen. In einem nachfolgenden Arbeitsgang werden zeitlich und/oder räumlich getrennt vom Klebstoffauftrag die Klebstoffschichten thermisch reaktiviert und die Substrate anschließend gefügt.

In bevorzugter Ausführungsform kann das thermische Reaktivieren der Klebstoffschicht in einem Zeitraum von 2 Stunden bis zu 3 Tagen vorzugsweise in einem Zeitraum von 2 Stunden bis zu 48 Stunden nach dem Klebstoffauftrag erfolgen. Dazu wird für das Reaktivieren die Klebstoffschicht auf eine Temperatur oberhalb der Schmelztemperatur erwärmt und anschließend werden die zu fügenden Substrate gefügt und ggf. kurzzeitig verpresst, bis die Anfangsfestigkeit durch das Erstarren des Schmelzklebstoffes erhalten wird. Durch die nachfolgende Vernetzung über die Feuchtigkeit wird dann in gewohnter Weise die Endfestigkeit erreicht. Die Erwärmung des Schmelzklebstoffes zur Reaktivierung kann dabei durch alle gängigen Verfahren erfolgen, d.h. durch IR-Strahler, NIR-Strahler, in Konvektionsöfen, durch Mikrowellenbestrahlung oder durch beheizbare Pressen oder Kalander direkt während des Fügens. Üblicherweise haben die nach dem erfindungsgemäßen Verfahren einzusetzenden Schmelzklebstoffe Schmelztemperaturen zwischen 60°C und 170°C vorzugsweise zwischen 100°C und 150°C.

Für das erfindungsgemäße Verfahren zum Verkleben von Substraten sind dabei insbesondere reaktive Schmelzklebstoffzusammensetzungen geeignet, die mindestens ein Umsetzungsprodukt mit freien Isocyanatgruppen aus 2,4'-Diphenyl-methandiisocyanat mit einem Anteil an 2,4'-Isomeren von mindestens 80 Gew.-%, vorzugsweise mindestens 90 Gew.-% und besonders bevorzugt mindestens 95 Gew.-% und mindestens einem Polyetherpolyol und/oder Polyalkylendiol mit einem Molekulargewicht unter 1000 und/oder einem kristallinen, teilkristallinen oder glasartig amorphen Polyesterpolyol enthalten.

In einer weiteren Ausführungsform des erfindungsgemäßen Verfahrens können die Schmelzklebstoffzusammensetzungen zusätzlich Umsetzungsprodukte aus 2,4'-Diphenyl-methandiisocyanat und bei Raumtemperatur flüssigen Polyesterpolyolen und/oder Polyetherpolyolen mit einem Molekulargewicht über 1000 enthalten.

Bei den erfindungsgemäß bevorzugt einzusetzenden Schmelzklebstoffen weisen die Reaktionspartner bei der Herstellung des Schmelzklebstoffes ein NCO/OH-Verhältnis des eingesetzten 2,4'-Diphenyl-methandiisocyanates zur Summe der Polyole von 1,1 bis 2,2, vorzugsweise von 1,2 bis 1,75 auf, wobei die Reaktionstemperatur während der Umsetzung 160°C vorzugsweise 130°C nicht übersteigen soll.

Die für das erfindungsgemäße Verfahren einzusetzenden Schmelzklebstoffe können weiterhin migrationsfähige, haftungsverstärkende Polyisocyanate mit einem Dampfdruck kleiner als 10⁻⁶ hPa bei 20°C enthalten, wobei diese haftungsverstärkenden, migrationsfähigen Polyisocyanate in einem Anteil von kleiner als 30 Gew.-%, vorzugsweise kleiner als 15 Gew.-%, bezogen auf die gesamte Klebstoffformulierung, mit verwendet werden. In einer weiteren Ausführungsform können die für das erfindungsgemäße Verfahren einzusetzenden Schmelzklebstoffzusammensetzungen anstelle von oder zusätzlich zu den vorgenannten migrationsfähigen, haftungsverstärkenden Polyisocyanaten organofunktionelle Alkoxysilane enthalten.

Das erfindungsgemäße Verfahren eignet sich insbesondere zur Laminierung von Bauteilen, Halbfabrikaten oder Konstruktionselementen in der Fahrzeug-Zulieferindustrie, im Containerbau, in der Schuhindustrie, in der Textilindustrie sowie im Apparate- und Gerätebau.

Nach bisherigen Stand der Technik müssen nämlich insbesondere in der Automobil-Zulieferindustrie "Kunstgriffe" angewendet werden, um das Prozessfenster für die Reaktivierung zu verlängern. Beispielsweise werden mit Klebstoff beschichtete Dekore für Innenausbauteile bei den Kunden in einer Tiefkühltruhe zwischengelagert, um eine vorzeitige Aushärtung der Klebstoffschicht zu vermeiden.

Nach dem erfindungsgemäßen Verfahren lassen sich eine Vielzahl von Substraten miteinander fügen, beispielhaft erwähnt seien Dekorfolien, textile Gewebe, Papierfolien, ABS-Folien, geschäumte PVC-Folien, Holzplatten, Holzfaser-Formkörper oder Metallfolien. Der Klebstoffauftrag kann dabei mit allen gängigen Verfahren, z.B. durch Sprühauftrag, Spinn-Sprühauftrag, durch Aufrakeln, durch Extrusion mit einer Breitschlitzdüse oder ähnlichen Verfahren erfolgen. Bei der Zwischenlagerung der derartig beschichteten Substrate sollte darauf geachtet werden, daß diese in einer möglichst trockenen Atmosphäre und bei nicht zu hoher Temperatur erfolgt, beispielsweise bei Temperaturen bis zu 30°C und relativen Luftfeuchtigkeiten bis zu 50 %. Überraschenderweise erleiden die Haftungs- und Alterungseigenschaften der Verklebungen mit derartig zwischengelagerten klebstoffbeschichteten Substraten keine Einbußen.

Dieses Ergebnis ist überraschend, da die Schmelzklebstoffe gemäß erfindungsgemäßem Verfahren in den Prepolymer-Endgruppen nur noch reaktionsträge Isocyanatgruppen aufweisen und es wäre zu erwarten gewesen, daß wegen dieser Reaktionsträgheit die Haftungs- und Alterungseigenschaften der Verklebungen gemäß erfindungsgemäßen Verfahren signifikant schlechter sein würden als bei den Verfahren gemäß Stand der Technik.

Falls nach dem Reaktivieren und Verpressen der zu verklebenden Substrate sehr schnelle Endfestigkeit erzielt werden soll, kann ggf. vor dem Reaktivieren und Verpressen der beschichteten Substrate die Klebstoffschicht mit einer wässrigen Lösung eines gängigen Polyurethan-Katalysators beschleiert werden.

Vorzugsweise sollten die für das erfindungsgemäße Verfahren verwendeten Schmelzklebstoffe einen niedrigen Gehalt an monomeren Diisocyanaten aufweisen, dieser sollte vorzugsweise unter 0,5 Gew.-% und besonders bevorzugt deutlich unter 0,25 Gew.-%, bezogen auf die gesamte Klebstoffzusammensetzung sein. Derartige Klebstoffe werden beispielsweise in der WO 03/033562 A1 oder in der WO 03/00652 A1 offenbart. In der erstgenannten Schrift sind auf der Seite 7 bis Seite 13 nähere Angaben über zweckmäßige Zusammensetzungen von Schmelzklebstoffen zu finden, die sich für das erfindungsgemäße Verfahren besonders gut eignen. Diese Offenbarungen sind ausdrücklich Bestandteil dieser Anmeldung.

Für die vorgenannte Beschleierung vor der Reaktivierung der Klebstoffschicht geeignete Katalysatoren sind beispielsweise in der WO 01/40342 auf Seite 11 bis 13 genannt, für die Ausführungsform der Katalysatorbeschleierung sind die dort genannten Katalysatoren ausdrücklich Bestandteil der Offenbarung dieser Erfindung.

Die erfindungsgemäß verwendeten PUR-Hotmelts auf Basis von 2,4'-MDI können z.B. durch Zugabe von Dimorpholinodiethylether (DMDEE) "milde" katalysiert werden, um das Zeitfenster für die Reaktivierung "nach Maß" einzustellen.

Nachfolgend soll die Erfindung anhand von einigen Prinzipversuchen dargestellt werden, wobei die Auswahl der Beispiele keine Beschränkung des Umfanges des Erfindungsgegenstandes darstellen soll. Sie zeigen nur modellhaft die Wirkungsweise des erfindungsgemäß einzusetzenden Verfahrens und seine Vorteile gegenüber dem Stand der Technik in Bezug auf die Möglichkeit dem Zeitraum der Reaktivierung der Schmelzklebstoffschicht signifikant auszudehnen, ohne die vorteilhaften Eigenschaften von reaktiven Schmelzklebstoffen, insbesondere in ihrer monomerarmen Form, zu verlieren.

### Beispiele

In den nachfolgenden Beispielen und Vergleichsbeispielen wurden Schmelzklebstoffe auf Basis von 4,4'-MDI und 2,4'-MDI mit Polyolgemischen in üblichen Isocyanatkennzahlen (NCO/OH-Verhältnissen) zu Schmelzklebstoffen umgesetzt und dann dem erfindungsgemäßen Verklebungsverfahren unterworfen.

### Vergleichsbeispiel (1)

90 Teile eines Gemisches aus kristallinen, amorphen und flüssigen Polyesterpolyolen mit einer mittleren OH-Zahl von 32,9 wurden mit 10 Gew.-Teilen 4,4'-MDI (Anteil des 4,4'-Isomeren über 99 %) bei 100°C umgesetzt. Die Isocyanatkennzahl betrug 1,52.

### Beispiel 2

In gleicher Weise wurden 90 Teile eines Gemisches aus demselben Polyesterdiol-Gemisch mit einer mittleren OH-Zahl von 32,9 mit 10 Gew.-Teilen 2,4'-MDI (Anteil des 2,4'-Isomeren über 97,5 %) umgesetzt, wobei das MDI in mehreren Portionen zugegeben wurde, um eine mit dem Referenzprodukt vergleichbare Viskosität zu erzielen.

Die Eigenschaften in Bezug auf Verarbeitungstemperatur, Viskosität in der Schmelze, Schmelzstabilität sowie Abbindezeit, offene Zeit und Zeitfenster für Reaktivierung sind in der nachfolgenden Tabelle sowohl für das Vergleichsbeispiel als auch für das Beispiel 2 aufgeführt:
Hieraus wird deutlich, daß sowohl die Verarbeitungstemperatur als auch die Verarbeitungsviskosität und die Schmelzstabilität für das Verklebungsverfahren gemäß Stand der Technik und dem erfinderischen Verfahren weitgehend identisch sind. Ebenso sind die für Weiterverarbeitung wichtige Abbindezeit und offene Zeit in beiden Fällen im Rahmen der Meßgenauigkeit gleich.

Zur Bestimmung der Reaktivierung wurde der Schmelzklebstoff jeweils in dünner Schicht (Auftragsstärke 80 bis 100 g/m²) auf die Substrate mit einer Breitschlitzdüse aufgetragen und danach für die in der Tabelle spezifizierte Zeit bei 30°C und 50% relativer Luftfeuchtigkeit bis zur Reaktivierung zwischengelagert. Daran schloss sich in beiden Fällen die Weiterverarbeitung mittels thermischer Reaktivierung und Presskaschierung an. Das Zeitfenster für die Reaktivierung war für die erfindungsgemäßen Schmelzklebstoffe signifikant erweitert, so daß hier ohne Schwierigkeiten Klebstoffauftrag und Reaktivierung der Klebstoffschicht vor dem Fügen zeitlich und räumlich voneinander zu trennen sind. Die längere Endaushärtung von 7 bis 14 Tagen bei dem erfindungsgemäßen Verfahren im Vergleich zu 1 bis 5 Tagen bei dem Verfahren gemäß Stand der Technik (Lagerbedingungen 23°C/50% relative Luftfeuchtigkeit) kann dadurch ausgeglichen werden, daß vor dem Reaktivieren und Verpressen die beschichteten Substrate mit einer wäßrigen Katalysatorlösung von 0,1 Gew.-% Dimorpholinodiethylether in Wasser beschleiert werden. Damit läßt sich die für die Endaushärtung benötigte Zeit auf das "normale" Maß der Vergleichsprobe verkürzen.

Wie aus der Tabelle 2 ersichtlich ist, ist das Haftungsspektrum bei einer Vielzahl von Substraten bei dem erfinderischen Verfahren völlig adäquat und gleichwertig gegenüber dem üblichen Verfahren des Standes der Technik.

**Tabelle 1**

| | Beispiel 1 (Vergleich) | Beispiel 2 (erfinderisch) |
|---|---|---|
| Verarbeitungs-Temperatur | 130°C | 130°C |
| Viskosität bei 130°C | 35,6 Pas | 33,7 Pas |
| nach 16 std. Lagerung bei 130°C unter Feuchtigkeitsausschluß, Messung ebenfalls bei 130°C | 84,6 Pas | 80,6 Pas |
| Abbindezeit | 12 s | 13 s |
| Offene Zeit | 22 s | 23 s |
| Zeitfenster für Reaktivierung | 2 - 3 h | 20 - 30 h |

**Tabelle 2**

| | | |
|---|---|---|
| Haftungsbeurteilung nach Schulnotensystem nach 7 d Aushärtung bei 23°C / 50 % r. F. | | |
| Holzfaser-Träger | sehr gut | sehr gut |
| ABS | gut | gut |
| geschäumte PVC-Folie | sehr gut | sehr gut |
| Buchenholz | sehr gut | sehr gut |
| Holzfaser-Träger | sehr gut | sehr gut |

## Patentansprüche

1. Verfahren zum Verkleben von Substraten mit einem Klebstoff auf Basis von mindestens einer freie Isocyanatgruppen aufweisenden Polyurethanzusammensetzung **dadurch gekennzeichnet, daß**
a) die Polyurethanzusammensetzung Reaktionsprodukte aus mindestens einem Polyol und mindestens einem Diisocyanat mit einem Anteil von mindestens 80 Gew.-% 2,4'-Diphenyl-methandiisocyanat (2,4'-MDI) enthält,
b) der Klebstoff auf eine zu verklebende Oberfläche mindestens eines Substrates aufgetragen wird und
c) die Klebstoffschichten der mit Klebstoff versehenen Substrate zeitlich und/oder räumlich getrennt vom Klebstoffauftrag thermisch reaktiviert werden und
d) anschließend gefügt werden.

2. Verfahren nach Anspruch 1, **dadurch gekennzeichnet, daß** die Polyurethanzusammensetzung gemäß Merkmal a) ein Schmelzklebstoff ist.

3. Verfahren nach Anspruch 1 oder 2, **dadurch gekennzeichnet, daß** das Reaktivieren gemäß Merkmal c) 2 Stunden bis zu 3 Tagen, vorzugsweise 2 bis 48 Stunden nach dem Klebstoffauftrag gemäß Merkmal b) erfolgt.

4. Verfahren nach mindestens einem der vorhergehenden Ansprüchen **dadurch gekennzeichnet, daß** die verwendete reaktive Klebstoffzusammensetzung mindestens ein Umsetzungsprodukt mit freien Isocyanatgruppen aus
- 2,4'-Diphenylmethandüsocyanat mit einem Anteil an 2,4'-Isomeren von mindestens 80 Gew.%, vorzugsweise mindestens 90 Gew.%, besonders bevorzugt mindestens 95 Gew.-%
und
- mindestens einem Polyetherpolyol und/oder Polyalkylendiol mit einem Molekulargewicht unter 1000 und/oder einem kristallinen, teilkristallinen oder glasartig amorphen Polyesterpolyol
enthält.

5. Verfahren nach Anspruch 4 **dadurch gekennzeichnet, daß** die Klebstoffzusammensetzung zusätzlich Umsetzungsprodukte aus 2,4'-Diphenylmethandiisocyanat und bei Raumtemperatur flüssigen Polyesterpolyolen und/oder Polyetherpolyolen mit einem Molekulargewicht über 1000 enthält.

6. Verfahren nach mindestens einem der vorhergehenden Ansprüche, **gekennzeichnet durch** einen Gehalt der Klebstoffzusammensetzung an migrationsfähigen, haftungsverstärkenden Polyisocyanaten mit einem Dampfdruck kleiner als 10⁻⁶ hPa bei 20°C.

7. Verfahren nach Anspruch 6, **dadurch gekennzeichnet, daß** der Gehalt an migrationsfähigen, haftungsverstärkenden Polyisocyanaten kleiner als 30 Gew.%, vorzugsweise kleiner als 15 Gew.% ist.

8. Verfahren nach mindestens einem der vorhergehenden Ansprüche 6 oder 7, **dadurch gekennzeichnet, daß** die verwendete reaktive Schmelzklebstoffzusammensetzung nach Anspruch 1 bis 5 organofunktionelle Alkoxysilane als migrationsfähige, haftungsverstärkende Zusätze enthält.

9. Verfahren nach Anspruch 1 bis 5 **dadurch gekennzeichnet, daß** das NCO- zu OH-Verhältnis des eingesetzten 2,4'-Diphenylmethandiisocyanates zur Summe der Polyole 1,1 bis 2,2, vorzugsweise 1,2 bis 1,75 beträgt, wobei die Reaktionstemperatur während der Umsetzung 160°C, vorzugsweise 130° C nicht übersteigt.

10. Verwendung des Verfahrens nach mindestens einem der vorhergehenden Ansprüche zur Laminierung von Bauteilen, Halbfabrikaten oder Konstruktionselementen in der Fahrzeug-Zulieferindustrie, im Containerbau, in der Schuhindustrie, in der Textilindustrie sowie in Apparate- und Gerätebau.

## Claims

1. A method for bonding substrates with an adhesive based on at least one polyurethane composition having free isocyanate groups, **characterized in that**
a) the polyurethane composition contains products of reaction of at least one polyol and of at least one diisocyanate with a proportion of at least 80% by weight of 2,4'-diphenyl-methane-diisocyanate (2,4'-MDI),
b) the adhesive is applied on a surface to be adhesively bonded of at least one substrate, and
c) the adhesive layers of the substrates provided with adhesive are thermally re-activated temporally and/or spatially separated from the adhesive application and
d) subsequently joined.

2. The method according to claim 1, **characterized in that** the polyurethane composition according to feature a) is a hot melt adhesive.

3. The method according to claim 1 or claim 2, **characterized in that** the reactivation according to feature c) takes place 2 hours up to 3 days, preferably 2 to 48 hours after application of the adhesive according to feature b).

4. The method according to at least one of the preceding claims, **characterized in that** the reactive adhesive composition used contains at least one product of reaction with free isocyanate groups from the conversion of
- 2,4'-diphenyl-methane-diisocyanate with a 2,4'-isomer proportion of at least 80% by weight, preferably at least 90% by weight, more preferably at least 95% by weight
and
- of at least one polyether polyol and/or polyalkylene diol with a molecular weight below 1000 and/or a crystalline, partly crystalline or glassy amorphous polyester polyol,

5. The method according to claim 4, **characterized in that** the adhesive composition additionally contains are products of conversion of 2,4'-diphenyl-methane-diisocyanate and of polyether polyols and/or polyester polyols, liquid at room temperature, with a molecular weight above 1000.

6. The method according to at least one of the preceding claims, **characterized by** a content in the adhesive composition of migratable, adhesion-reinforcing polyisocyanates with a vapor pressure of less than 10⁻⁶ hPa at 20°C.

7. The method according to claim 6, **characterized in that** the content of migratable, adhesion-reinforcing polyisocyanates is less than 30% by weight, preferably less than 15% by weight.

8. The method according to at least one of the preceding claims 6 or 7, **characterized in that** the reactive hot-melt adhesive composition used according to claim 1 to 5 contains organofunctional alkoxysilanes as migratable, adhesion-reinforcing additives.

9. The method according to claim 1 to 5, **characterized in that** the NCO to OH ratio of the applied 2,4'-diphenyl-methane-diisocyanate, relatively to the sum of the polyols, is from 1.1 to 2.2, preferably 1.2 to 1.75, the reaction temperature during the conversion not exceeding 160°C, preferably 130°C.

10. The use of the method according to at least one of the preceding claims for laminating components, semi-finished products, or construction elements in the automotive supplier industry, in container construction, in the shoe industry, in the textile industry as well as in the construction of devices and apparatuses.

## Revendications

1. Procédé pour le collage de substrats avec un adhésif à base d'au moins une composition de polyuréthane présentant des groupes isocyanate libres, **caractérisé en ce que**
a) la composition de polyuréthane contient des produits réactionnels d'au moins un polyol et d'au moins un diisocyanate comprenant une fraction d'au moins 80 % en poids du 2,4'-diphénylméthanediisocyanate (2,4'-MDI) ;
b) on applique l'adhésif sur une surface à coller d'au moins un substrat ; et
c) on soumet les couches adhésives des substrats munis de l'adhésif à une réactivation thermique de façon séparée dans le temps et/ou dans l'espace par rapport à l'application de l'adhésif ; et
d) ensuite on les joint.

2. Procédé selon la revendication 1, **caractérisé en ce que** la composition de polyuréthane selon la caractéristique a) est un adhésif thermofusible.

3. Procédé selon la revendication 1 ou 2, **caractérisé en ce que** la réactivation selon la caractéristique c) a lieu de 2 heures à 3 jours, de préférence de 2 à 48 heures après l'application de l'adhésif selon la caractéristique b).

4. Procédé selon au moins une des revendications précédentes, **caractérisé en ce que** la composition adhésive réactive utilisée contient au moins un produit réactionnel comprenant des groupes isocyanate libres
- du 2,4'-diphénylméthanediisocyanate dont la fraction des 2,4'-isomères s'élève à au moins 80 % en poids, de préférence à au moins 90 % en poids, de manière particulièrement préférée à au moins 95 % en poids ;
et
- d'au moins un polyétherpolyol et/ou un polyalkylènediol possédant un poids moléculaire inférieur à 1000 et/ou d'un polyesterpolyol cristallin, partiellement cristallin ou amorphe vitreux.

5. Procédé selon la revendication 4, **caractérisé en ce que** la composition adhésive contient en outre des produits de réaction du 2,4'-diphénylméthane-diisocyanate et de polyesterpolyols et/ou de polyétherpolyols liquides à la température ambiante, possédant un poids moléculaire supérieur à 1000.

6. Procédé selon au moins une des revendications précédentes, **caractérisé par** une teneur de la composition adhésive en polyisocyanates renforçant l'adhérence et aptes à la migration avec une pression de vapeur qui est inférieure à 10⁻⁶ hPa à 20 °C.

7. Procédé selon la revendication 6, **caractérisé en ce que** la teneur en polyisocyanates renforçant l'adhérence et aptes à la migration est inférieure à 30 % en poids, de préférence inférieure à 15 % en poids.

8. Procédé selon au moins une des revendications précédentes 6 ou 7, **caractérisé en ce que** la composition adhésive réactive utilisée selon les revendications 1 à 5 contient des alcoxysilanes organofonctionnels à titre d'additifs renforçant l'adhérence et aptes à la migration.

9. Procédé selon les revendications 1 à 5, **caractérisé en ce que** le rapport des groupes NCO aux groupes OH du 2,4'-diphénylméthanediisocyanate mis en oeuvre par rapport à la somme des polyols s'élève de 1,1 à 2,2, de préférence de 1,2 à 1,75, la température réactionnelle lors de la mise en réaction n'étant pas supérieure à 160 °C, de préférence pas supérieure à 130 °C.

10. Utilisation du procédé selon au moins une des revendications précédentes pour la stratification de composants, de produits semi-fabriqués ou d'éléments de construction dans l'industrie de sous-traitance de véhicules automobiles, dans la construction de conteneurs, dans l'industrie de la chaussure, dans l'industrie textile et dans la construction de dispositifs et d'appareils.
